## Europäisches Patentamt

## European Patent Office

## Office européen des brevets

(11) Numéro de publication: **0 056 756**
**B1**

(12) **FASCICULE DE BREVET EUROPEEN**

(19)

(45) Date de publication du fascicule du brevet:
**14.08.85**

(21) Numéro de dépôt: **82400049.1**

(22) Date de dépôt: **12.01.82**

(51) Int. Cl.⁴: **H 02 K 5/22**

(54) Moteur électrique, accessoire de connexion pour un tel moteur, et appareil comprenant ce moteur.

(30) Priorité: **16.01.81 FR 8100781**

(43) Date de publication de la demande:
**28.07.82 Bulletin 82/30**

(45) Mention de la délivrance du brevet:
**14.08.85 Bulletin 85/33**

(84) Etats contractants désignés:
**AT DE GB IT**

(56) Documents cités:
**FR - A - 2 111 985**
**FR - A - 2 453 511**
**US - A - 1 754 645**
**US - A - 3 541 365**

(73) Titulaire: **SOCIETE ELECTRO MECANIQUE DU NIVERNAIS SELNI, 1, rue des Grands Champs, F-58000 Nevers (FR)**

(72) Inventeur: **Billet, Jacques, Thomson-Brandt SCPI 173, bld. Haussmann, F-75360 Paris Cedex 08 (FR)**
Inventeur: **Pillot, Alain, Thomson-Brandt SCPI 173, bld. Haussmann, F-75360 Paris Cedex 08 (FR)**

(74) Mandataire: **Grynwald, Albert et al, THOMSON-CSF SCPI 173, Bld Haussmann, F-75379 Paris Cedex 08 (FR)**

## Description

L'invention est relative à un moteur électrique asynchrone ou synchrone et à un connecteur pour les fils conducteurs d'alimentation et de commande du stator d'un tel moteur.

Elle concerne également un appareil électroménager, telle qu'une machine à laver le linge, comportant un tel moteur.

Les stators des moteurs électriques d'entraînement des tambours des machines à laver le linge sont habituellement raccordés électriquement, par une pluralité de fils, aux autres circuits faisant partie de la machine. La disposition des connexions différant d'un type de machine à un autre, les fils d'alimentation et de commande du stator forment un faisceau souple de fils, isolé chacun par une gaine plastique, qui sont reliés, en général par une opération manuelle, aux circuits de la machine lors du montage de cette dernière. De telles opérations manuelles nécessitent un temps de main d'œuvre important qui entre pour une part non négligeable dans les coûts de fabrication; cet inconvénient est en outre aggravé par le fait que ces appareils sont fabriqués en grande série.

Le moteur selon l'invention évite cet inconvénient.

Il comprend, comme déjà en soi connu par le brevet français 2 111 985, un organe amovible, tel qu'une plaquette de circuits imprimés, qui assure une correspondance prédéterminée entre les conducteurs issus du stator et les bornes à l'extérieur du boîtier du moteur, et il est caractérisé en ce qu'il comprend un connecteur rassemblant les fils issus du stator à l'intérieur du boîtier du moteur et fixé à ce boîtier, et en ce que l'organe amovible traverse la paroi du boîtier du moteur par une ouverture de ce boîtier. Le connecteur de sortie peut être fixé au boîtier; dans ce cas, la liaison avec les circuits de la machine s'effectue par un autre connecteur, faisant partie de ces circuits, destiné à coopérer avec le connecteur de sortie. Le connecteur de sortie peut aussi provenir des circuits de la machine et être en liaison directe avec l'organe amovible.

Quelle que soit la solution choisie, l'invention permet de fabriquer des moteurs destinés à équiper des machines à laver de divers types qui ne diffèrent que par la configuration de l'organe amovible de liaison. Les machines à laver destinées à être équipées d'un tel moteur présenteront alors un connecteur complémentaire du connecteur de sortie du moteur ou de l'organe amovible et le raccordement électrique des circuits de cette machine au moteur ne nécessitera ainsi qu'une simple opération d'enfichage facilitée par la disposition de l'organe amovible à travers le boîtier du moteur. L'organe amovible, qui peut être aisément fabriqué en grande série, sera de préférence tel que son montage dans le connecteur rassemblant les fils issus du stator ne fait intervenir qu'une simple translation.

Dans le mode de réalisation préféré de l'invention, l'organe de liaison est une plaquette du type à circuits imprimés sur laquelle l'impression est constituée par les connexions entre les deux connecteurs. Une telle plaquette est aisément extraite et remise en place.

Cette plaquette peut comporter des fiches coopérant avec des fiches complémentaires d'un coupleur pour mettre en circuit ou hors circuit un bobinage de démarrage et/ou un bobinage de freinage faisant partie du stator du moteur.

D'autres dispositions de l'invention apparaîtront avec la description de certains de ses modes de réalisation, celle-ci étant effectuée en se référant aux dessins ci-annexés sur lesquels:

– la figure 1 est une vue schématique en coupe axiale d'une partie d'un moteur selon l'invention;
– la figure 1a est une vue schématique suivant la flèche f de la figure 1;
– la figure 2 représente une plaquette du type à circuits imprimés pour le moteur illustré sur la fi-gure1;
– la figure 2a est une variante de la figure 2;
– la figure 3 est une vue analogue à la figure 1, mais pour une variante;
– la figure 4 représente une plaquette du type à circuits imprimés pour le moteur illustré sur la figure 3;
– la figure 5 est une vue analogue à celle de la figure 1, mais encore pour une autre variante;
– la figure 6 représente les enroulements du stator d'un moteur selon l'invention, un circuit imprimé de connexion et, de façon schématique, un coupleur;
– la figure 7 est une vue en perspective du circuit imprimé du mode de réalisation représenté sur la figure 6;
– la figure 8 est une vue en perspective d'un coupleur selon l'invention;
– la figure 9 est une vue partielle en perspective du moteur pour le même mode de réalisation, et
– la figure 10 montre un circuit imprimé pour une autre réalisation.

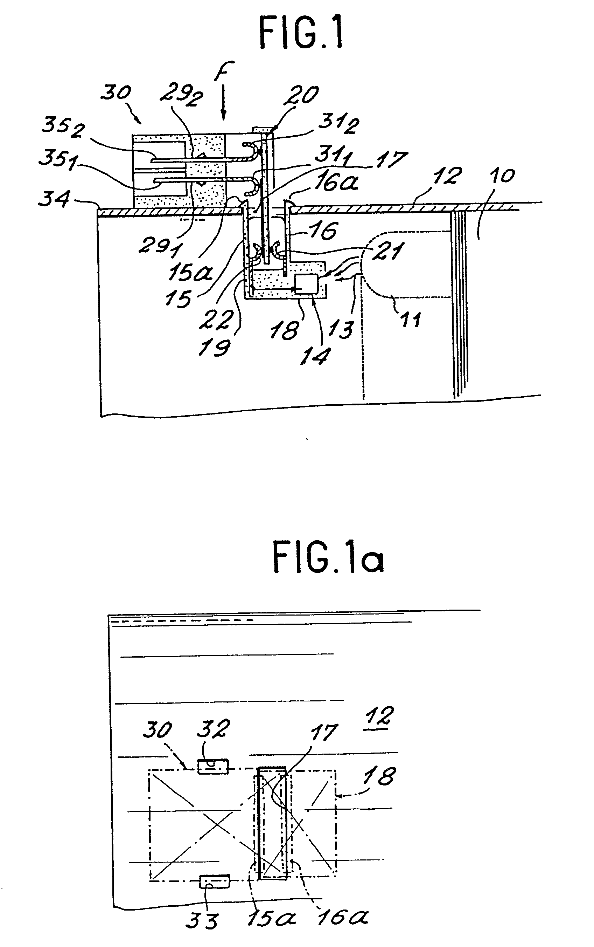

Le moteur électrique représenté sur la figure 1 est un moteur asynchrone d'entraînement du tambour d'une machine à laver le linge.

Il comprend, de façon classique, un stator 10 sur lequel sont bobinés des enroulements 11 destinés à être alimentés en courant alternatif de façon à produire un champ tournant pour l'entraînement du rotor (non représenté) monté sur l'arbre (également non représenté).

Le stator 10 est enfermé dans un boîtier en tôle métallique 12 de forme générale cylindrique de même axe que celui de l'arbre et constituant un boîtier pour l'ensemble du moteur.

Les enroulements du stator comportent des premiers bobinages qui, lorsqu'ils sont alimentés, permettent de faire tourner le moteur à une première vitesse, par exemple celle qui correspond au processus de lavage du linge, des seconds bobinages permettant de le faire tourner à une vitesse supérieure, par exemple pour l'essorage, un bobinage de phase auxiliaire pour le démarrage et, en outre, en série avec ces bobinages, un dispositif de protection thermique permettant d'interrompre l'alimentation de ces bobinages lorsque la température du moteur dépasse une valeur prédéterminée.

Le nombre de fils conducteurs sortant du stator 11 pour son alimentation et sa commande est donc relativement important.

Dans les moteurs antérieurement connus les fils sortant du stator sont isolés chacun par une gaine plastique et forment un faisceau raccordé à des fils correspondants du circuit de la machine à laver.

L'invention prévoit un connecteur solidaire du boîtier 12 évitant que des fils souples sortent dudit moteur.

Dans l'exemple, les fils conducteurs 13 sortant du stator sont isolés par émaillage et sont rassemblés à l'intérieur du boîtier 12 grâce à un connecteur 14. La fixation de ce dernier au boîtier est assurée par clipsage grâce à des pattes 15 et 16 se terminant chacune par un redent, respectivement 15a et 16a, coopérant avec les bords d'une ouverture 17 du boîtier 12. Cette ouverture a sensiblement la forme d'un rectangle allongé en direction perpendiculaire à l'axe du moteur (figure 1a).

Le connecteur 14 présente une première partie 18 de forme générale parallélépipèdique à laquelle aboutissent les fils 13 et une seconde partie 19 présentant les pattes 16 et 17 et constituant un logement pour une plaquette ou carte 20 du type à circuits imprimés.

Au fond de cette seconde partie 19 du connecteur 14 se trouvent des éléments à ressort 21 et 22, recevant à serrage une extrémité 23 de la plaquette 20 et dont certains, de référence 22, sont conducteurs et connectés électriquement aux entrées du connecteur se trouvant dans la partie 18.

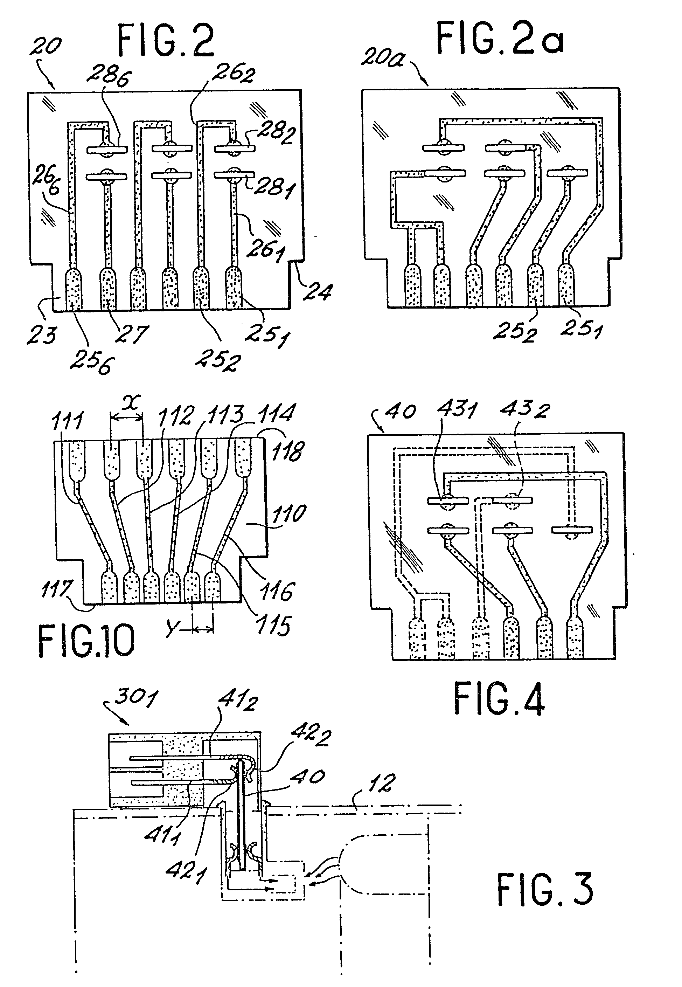

La plaquette 20 (figure 2) a la forme générale d'un rectangle avec, en saillie d'un grand côté 24, une bande étroite formant l'extrémité 23 sur laquelle sont formées les extrémités $25_1$, $25_2$ de conducteurs $26_1$, $26_2$ imprimés sur cette plaquette. Ces extrémités $25_1$, $25_2$ aboutissent au bord libre 27 de l'extrémité 23 parallèle au côté 24 et auxquelles elles sont perpendiculaires. Chaque conducteur $26_1$, $26_2$, $26_6$ est relié à son autre extrémité à un plot conducteur $28_1$, $28_2$, $28_6$ destiné à être relié électriquement par contact avec une languette conductrice correspondante $29_1$, $29_2$ (figure 1) faisant partie d'un autre connecteur 30 également fixé au manchon 12.

Pour le contact des languettes 29 avec les plots correspondants, chacun de ces dernières présente à une extrémité une partie recourbée $31_1$, $31_2$.

Le connecteur 30 est fixé au boîtier 12 par encliquetage grâce à des pattes (non représentées) qu'il présente et à des ouvertures 32 et 33 du manchon 12 (figure 1a).

Ce connecteur 30 est disposé à proximité d'une extrémité 34 du manchon, à l'extérieur de ce dernier et de manière que les languettes $29_1$, $29_2$ soient disposées de façon sensiblement parallèle à l'axe du moteur. Par contre, le plan de la plaquette 20 est perpendiculaire à cet axe. La partie avant du connecteur 30, présentant les extrémités $35_1$, $35_2$ des languettes $29_1$, $29_2$, à l'opposé des parties recourbées $31_1$, $31_2$, est dirigée à l'opposé du stator 10.

Avec la disposition selon l'invention on peut fabriquer en grande série des moteurs identiques avec des connecteurs 18 et 30 identiques qui sont cependant destinés à des appareils, tels que des machines à laver, de types divers; seule la configuration des conducteurs sur la plaquette 20 peut différer d'un type de machine à un autre. La figure 2a représente une plaquette 20a du type à circuits imprimés de même forme et de mêmes dimensions que la plaquette 20, avec les mêmes extrémités $25_1$, $25_2$ de conducteurs imprimés mais avec une connexion différente entre ces extrémités et les plots conducteurs sur la plaquette. Le nombre de plots de la plaquette $20_a$ est inférieur au nombre de plots sur la plaquette 20.

Le mode de réalisation représenté sur les figures 3 et 4 diffère de celui décrit en relation avec les figures 1, 1a, 2 et 2a par le fait que la plaquette 40 de type à circuits imprimés présente des conducteurs sur ses deux faces alors que dans le cas de la figure 2 on prévoit de conducteurs sur une seule face de la plaquette 20.

Dans cet exemple une languette métallique $41_1$ du connecteur extérieur $30_1$ présente une extrémité recourbée $42_1$ destinée à entrer en contact avec un plot conducteur $43_1$ sur une face de la plaquette 40 et une autre languette $41_2$ de ce même connecteur $30_1$, plus éloignée de la surface externe du manchon 12 que la languette $41_1$, est plus longue que ladite languette $41_1$ et présente une extrémité recourbée $42_2$ destinée à entrer en contact avec un plot $43_2$ sur l'autre face de la plaquette 40.

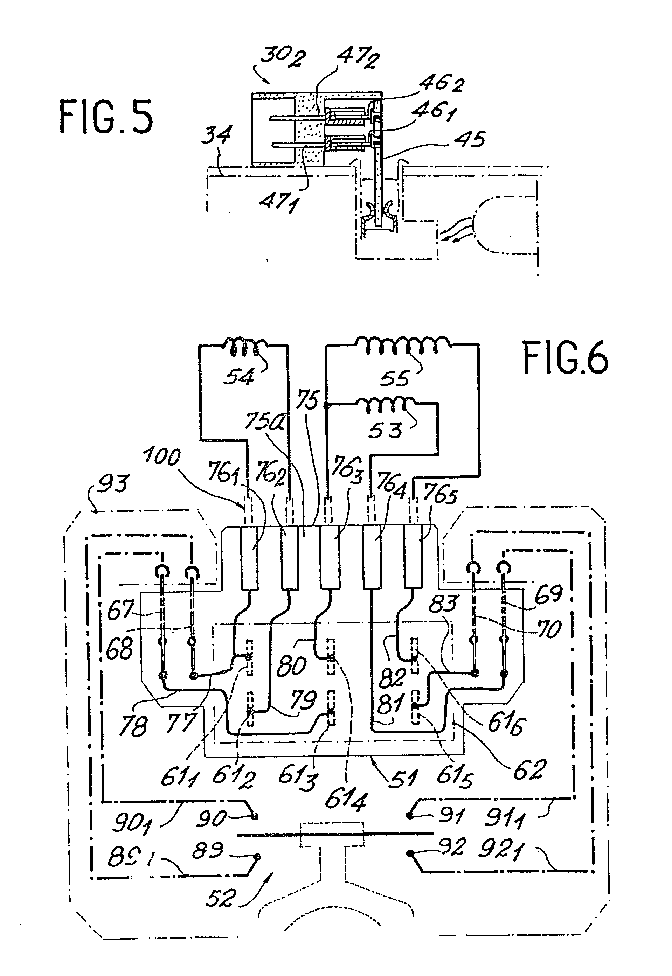

Dans l'exemple de la figure 5 la plaquette 45 du type à circuits imprimés ne présente pas de simples plots, tels que ceux de références 28 et 43 sur les figures 2 et 4, mais, à la place, des picots $46_1$, $46_2$ en saillie perpendiculairement à sa face tournée vers l'extrémité 34 et destinés à être introduits dans des parties femelles complémentaires des extrémités des languettes conductrices $47_1$, $47_2$. En variante les extrémités des languettes sont soudées sur ces picots. Selon une autre variante ces extrémités de languettes sont serties sur les picots.

Dans l'exemple représenté sur les figures 6 à 9 la plaquette 51 de circuits imprimés s'étend, contrairement aux exemples décrits précédemment, dans un plan parallèle à l'axe du moteur (figure 9) et cette plaquette connecte un coupleur 52 entre les circuits de la machine et le stator. Ce coupleur interrompt l'alimentation du bobinage auxiliaire 53 (figure 6) du stator après le démarrage. Il permet également, lorsque l'alimentation de l'enroulement 55 d'essorage est interrompue, de mettre en circuit l'enroulement 54 du stator qui, lorsqu'il est alimenté, fait tourner le moteur à la vitesse de lavage. De cette manière avant interruption complète de l'alimentation du moteur celui-ci est alimenté pour tourner à une vitesse plus faible que la vitesse de départ et le freinage n'est pas trop brusque.

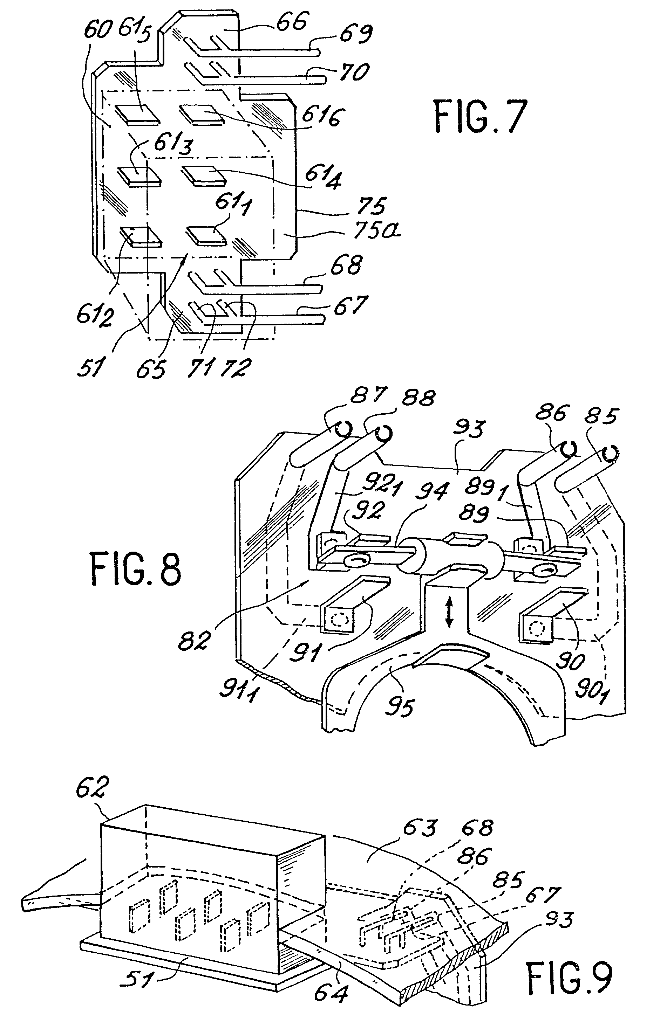

La plaquette 51 présente un corps 60 (figure 7) duquel sont en saillie d'un côté et perpendiculairement à la plaquette, six languettes $61_1$ à $61_6$ destinées à être introduites dans des fiches femelles (non montrées) du connecteur de sortie 62 (figure 9) qui traverse le boîtier 63 du moteur au voisinage de l'extrémité 64 de son manchon. Les languettes 61 ont ainsi une direction sensiblement radiale.

Du corps 60 dépassent deux bras 65 et 66 dont chacun porte deux fiches, respectivement 67 et 68 pour le bras 65, et 69 et 70 pour le bras 66. Ces fiches sont parallèles entre elles et se trouvent dans un même plan parallèle à celui de la plaquette à une distance déterminée de cette dernière. A cet effet, chacun des fiches, par exemple celle de référence 67, est reliée mécaniquement à la plaquette par l'intermédiaire de deux courtes jambes 71 et 72 elles-mêmes en liaison électrique avec une piste de la plaquette 51. Les extrémités des fiches 67 à 70 sont sur une ligne droite au droit de l'arête 75 du corps 60 de la plaquette à laquelle aboutissent toutes les pistes conductrices et qui est destinée à être introduite dans le connecteur rassemblant les fils issus du stator et se trouvant à l'intérieur du manchon 63 (ce connecteur n'a pas été représenté pour ne pas surcharger les dessins).

Les pistes conductrices et leurs extrémités $76_1$ à $76_5$ se terminant suivant l'arête 75 et perpendiculaires à celle-ci ont été représentées sur la figure 6.

Une piste 77 relie l'extrémité $76_1$ à la fiche 68. Une piste 78 établit une connexion entre la fiche 67 et la languette $61_3$. L'extrémité $76_2$ est connectée par une piste 79 à la languette $61_2$. L'extrémité $76_3$ est connectée par une piste 80 à la languette $61_4$. L'extrémité $76_4$ est en liaison par la piste 81 avec la fiche 69. Une piste 82 connecte l'extrémité $76_5$ à la languette $61_6$. Enfin une piste 83 établit une liaison entre la fiche 70 et la languette $61_5$.

Les fiches 67 à 70 se trouvent de part et d'autre de la partie $75_a$ du corps 60 portant les extrémités 76 des pistes et qui est destinée à être introduite dans le connecteur interne au boîtier. Ces fiches 67 à 70 coopèrent avec des fiches femelles complémentaires respectivement 85, 86, 87 et 88 pour la connexion au coupleur 52 (figure 8). Chacun de ces fiches femelles est à l'extrémité d'un bras pour sa connexion à un contact correspondant du coupleur.

Les contacts 89, 90, 91 et 92 du coupleur 52 sont constitués par des languettes de cuivre solidaires d'une plaque de base isolante 93. Un pontet conducteur 94 est à l'extrémité d'un étrier 95 actionné par un dispositif centrifuge (non représenté), en soi connu, permettant de déplacer ce pontet 94 entre une première position – qui est celle représentée sur la figure 8 – établissant une liaison électrique entre les contacts 89 et 92 et une seconde position où il établit une liaison entre les contacts 90 et 91. Les bras $89_1$ et $92_1$ reliant les contacts 89 et 92 aux fiches femelles, respectivement 86 et 88, sont appliqués d'un premier côté de la plaque de base 93 tandis que les deux autres bras $90_1$ et $91_1$ sont appliqués de l'autre côté de cette même plaque 93.

Chacun des bras est constitué par une lame de cuivre dont la position est, comme on l'a vu, bien déterminée et qui n'est donc pas mobile comme pourrait l'être un fil. Ainsi dans cet exemple, le nombre des fils souples est encore réduit à un minimum.

La plaque 93 est disposée perpendiculairement à l'axe du moteur (figure 9). Les liaisons entre les extrémités 76 de pistes conductrices sur la plaquette 51 et les bobinages 53, 54 et 55 sont effectuées par le connecteur interne; ces liaisons ont été représentées par des traits interrompus 100 sur la figure 6. De même les bras $89_1$, $90_1$, $91_1$, et $92_1$ ont été représentés par des traits mixtes pour montrer, sur cette même figure, les connexions électriques entre la plaquette 51, les bobinages du stator du moteur et le coupleur.

La séquence d'alimentation des languettes 61 est imposée par le programmateur de la machine à laver.

Le montage s'effectue de la façon suivante: la plaquette de circuit imprimé est d'abord introduite dans le connecteur interne en même temps que les fiches 67 à 70 s'introduisent dans les fiches femelles 85 à 88 et, ensuite, le connecteur de sortie 62 est fixé au manchon 63 grâce à des pattes de clipsage (non représentées) comme dans le mode de réalisation décrit en relation avec les figures 1 et 1a.

Dans une variante simplifiée on ne prévoit pas de connecteur de sortie fixé au boîtier du moteur tels que ceux de références 30, $30_1$ ou 62. La liaison avec les circuits de la machine à laver s'effectue alors par coopération, par enfichage d'un connecteur provenant de ces circuits avec des pistes du circuit imprimé.

La figure 10 représente une plaquette 110 de type à circuit imprimé utilisable dans ce cas. Cette plaquette comporte des pistes conductrices séparées 111 à 116 s'étendant entre les bords parallèles 117 et 118. Le bord 117 est destiné à être introduit dans le connecteur interne au boîtier tandis que le bord 118 est destiné à coopérer avec un connecteur (non montré) provenant des circuits de la machine. Dans l'exemple le pas y séparant deux contacts voisins du connecteur interne est plus petit que le pas correspondant x du connecteur provenant des circuits de la machine. Les pistes sur la plaquette 110 permettent de tenir compte de cette différence; la plaquette a donc le rôle d'un adaptateur de pas.

**Revendications**

1. Moteur électrique présentant des conducteurs d'alimentation et de commande sortant de son stator et un organe amovible assurant une correspondance prédéterminée entre les conducteurs issus du stator et des bornes de sortie à l'extérieur du boîtier du moteur, caractérisé en ce qu'il comprend un connecteur (14) rassemblant les fils issus du stator à l'intérieur du boîtier (12) du moteur et fixé à ce boîtier, et en ce que l'organe amovible (20, 40, 110) traverse la paroi du boîtier du moteur par une ouverture (17) de ce boîtier.

2. Moteur selon la revendication 1, caractérisé en ce que l'organe amovible (20) et le connecteur (14) rassemblant les fils issus du stator sont tels que la mise en place et le remplacement dudit organe s'effectuent par une simple translation.

3. Moteur selon la revendication 1 ou la revendication 2, caractérisé en ce que l'organe amovible comporte une plaquette (20; 51; 110) du type à circuits imprimés.

4. Moteur selon l'une quelconque des revendications précédentes, caractérisé en ce qu'il comporte un connecteur de sortie (30) fixé au boîtier du moteur et à l'extérieur de ce dernier.

5. Moteur selon la revendication 3, caractérisé en ce que la plaquette (20) présente des éléments conducteurs $(25_1, 25_2, 25_6)$ au voisinage de l'une de ses arêtes (27) destinés à être reliés électriquement aux bornes du premier connecteur (14) rassemblant les fils issus du stator par une introduction à translation à l'intérieur de ce connecteur.

6. Moteur selon la revendication 5, caractérisé en ce que la partie de la plaquette (20) qui est destinée à rester à l'extérieur du boîtier (12) présente des plots conducteurs $(28_1, 28_2)$ associés à des éléments conducteurs $(25_1, 25_2)$ et destinés à entrer en contact avec des extrémités $(31_1, 31_2)$ de languettes $(29_1, 29_2)$ faisant partie du connecteur de sortie (30).

7. Moteur selon la revendication 6, caractérisé en ce que les plots conducteurs $(28_1, 28_2)$ sont sur une seule face de la plaquette (20).

8. Moteur selon la revendication 6, caractérisé en ce que les plots $(43_1, 43_2)$ sont sur les deux faces de la plaquette (40).

9. Moteur selon la revendication 3, caractérisé en ce que des picots $(46_1, 46_2)$ sont en saillie de la partie de la plaquette (45) à l'extérieur du boîtier et sont destinés à être reliés par enfichage, soudage ou sertissage, à des bornes correspondantes d'un connecteur de sortie (30).

10. Moteur selon l'une quelconque des revendications précédentes, caractérisé en ce que les fils conducteurs (13) sortant des bobinages (11) du stator (10) et aboutissant au connecteur (14) correspondant sont émaillés.

11. Moteur selon l'une quelconque des revendications précédentes, caractérisé en ce que le ou les connecteur(s) est (sont) solidaire(s) du boîtier (12) par encliquetage.

12. Moteur selon la revendication 3, caractérisé en ce que la plaquette (20, 20a, 40, 45) est disposée perpendiculairement à l'axe du moteur.

13. Moteur selon les revendications 4 et 12, caractérisé en ce que le connecteur de sortie (30, $30_1, 30_2$) présente des languettes (35, 41, 47) de connexion s'étendant parallèlement à l'axe dudit moteur.

14. Moteur selon la revendication 3, caractérisé en ce qu'un connecteur de sortie (62) traverse la paroi (63) du boîtier du moteur.

15. Moteur selon la revendication 14, caractérisé en ce que la plaquette de circuits imprimés (51) porte des languettes (61) s'encastrant dans des éléments femelles complémentaires du connecteur de sortie (62).

16. Moteur selon la revendication 3, caractérisé en ce que la plaquette de circuits imprimés (51) porte des fiches (67 à 70) destinées à coopérer avec des fiches complémentaires (85 à 88) reliées aux contacts (89 à 92) d'un coupleur (52) pour mettre en circuit ou hors circuit un bobinage (53) de démarrage et/ou un bobinage (54) supplémentaire permettant de faire tourner le moteur à une vitesse différente de celle à laquelle il tourne lorsque le bobinage principal (55) est alimenté.

17. Moteur selon la revendication 16, caractérisé en ce que le coupleur comporte une embase (93) isolante sur laquelle sont disposés des bras conducteurs $(89_1$ à $92_1)$ établissant la liaison électrique entre les contacts du coupleur et les fiches (85 à 88).

18. Moteur selon les revendications 14 et 17, caractérisé en ce que la plaquette de circuits imprimés (51) s'étend de façon sensiblement parallèle à l'axe du moteur et l'embase (93) du coupleur est perpendiculaire à cet axe.

19. Moteur selon l'une quelconque des revendications 16 à 18, caractérisé en ce que la plaquette de circuits imprimés présente une partie en saillie portant les extrémités (76) des pistes conductrices qui sont perpendiculaires à l'arête (75) de cette partie en saillie, et en ce que les fiches (67 à 70) sont également perpendiculaires à ladite arête et sont disposées par couples de part et d'autre de la partie en saillie.

20. Moteur selon la revendication 1, caractérisé en ce que la connexion à des circuits extérieurs est effectuées directement sur l'organe amovible (110).

21. Moteur selon les revendications 3 et 20, caractérisé en ce que la plaquette (110) du type à circuits imprimés présente des bords parallèles auxquels aboutissent les pistes conductrices (111 à 116) de cette plaquette.

22. Machine à laver le linge, caractérisé en ce que son tambour est entraîné par un moteur électrique selon l'une quelconque des revendications 1 à 21.

**Patentansprüche**

1. Elektrischer Motor mit aus dem Motorständer herausragenden Versorgungs- und Steuerungsleitungen und mit einem abnehmbaren Teil, der eine vorbestimmte Entsprechung zwischen den Leitungsdrähten aus dem Motorständer und den Ausgangsklemmen ausserhalb des Motorgehäuses sicherstellt, dadurch gekennzeichnet, dass er einen Verbinder (14) enthält, der die Drähte aus dem Motorständer innerhalb des Motorgehäuses (12) enthält, zusammenfasst und auf dem Motorgehäuse befestigt ist, und dass der abnehmbare Teil (20, 40, 110) die Wandung des Motorgehäuses durch eine Öffnung (17) in diesem Gehäuse durchquert.

2. Motor gemäss Anspruch 1, dadurch gekennzeichnet, dass der abnehmbare Teil (20) und der Verbinder (14), der die Drähte aus dem Motorständer zusammenfasst, so ausgeführt sind, dass das Einsetzen und Austauschen des genannten Teiles durch eine einfache Translationsbewegung erfolgt.

3. Motor gemäss Anspruch 1 und Anspruch 2, dadurch gekennzeichnet, dass der abnehmbare Teil eine Platte (20; 51; 110) in der Art einer Platte mit gedruckten Schaltungen enthält.

4. Motor gemäss irgendeinem der vorgenannten Ansprüche, dadurch gekennzeichnet, dass er einen Ausgangsverbinder (30), der auf dem Motorgehäuse und ausserhalb dieses Gehäuses befestigt ist, enthält.

5. Motor gemäss Anspruch 3, dadurch gekennzeichnet, dass die Platte (20) nahe einer ihrer Kanten (27) leitende Elemente ($25_1$, $25_2$, $25_6$) aufweist, die zur elektrischen Verbindung mit den Klemmen des ersten Verbinders (14), der die Drähte aus dem Motorständer zusammenfasst, durch eine Schiebebewegung im Innern dieses Verbinders bestimmt sind.

6. Motor gemäss Anspruch 5, dadurch gekennzeichnet, dass der Teil der Platte (20), der zum Verbleib ausserhalb des Gehäuses (12) bestimmt ist, leitende Kontaktklötzchen ($28_1$, $28_2$) aufweist, die leitenden Elementen ($25_1$, $25_2$) zugeordnet sind und die zur Kontaktberührung mit den Enden ($31_1$, $31_2$) der Zungen ($29_1$, $29_2$) dienen, die Bestandteile des Ausgangsverbinders (30) sind.

7. Motor gemäss Anspruch 6, dadurch gekennzeichnet, dass die stromleitenden Kontaktklötzchen ($28_1$, $28_2$) auf einer einzigen Seite der Platte (20) liegen.

8. Motor gemäss Anspruch 6, dadurch gekennzeichnet, dass die Kontaktklötzchen ($43_1$, $43_2$) auf beiden Flächen der Platte (40) angebracht sind.

9. Motor gemäss Anspruch 3, dadurch gekennzeichnet, dass Zapfen ($46_1$, $46_2$) von dem Teil der Platte (45) ausserhalb des Gehäuses abstehen und dazu bestimmt sind, durch Einstecken, Löten oder Bördeln mit entsprechenden Klemmen eines Ausgangsverbinders (30) verbunden zu werden.

10. Motor gemäss irgendeinem der vorerwähnten Ansprüche, dadurch gekennzeichnet, dass die aus den Wicklungen (11) des Motorständers (10) herausragenden und zum entsprechenden Verbinder (14) laufenden Leitungsdrähte (13) emailliert sind.

11. Motor gemäss irgendeinem der vorerwähnten Ansprüche, dadurch gekennzeichnet, dass der oder die Verbinder durch Verklinkung auf dem Gehäuse (12) fest angebracht ist (sind).

12. Motor gemäss Anspruch 3, dadurch gekennzeichnet, dass die Platte (20, $20_a$, 40, 45) rechtwinklig zur Achse des Motors angeordnet ist.

13. Motor gemäss den Ansprüchen 4 und 12, dadurch gekennzeichnet, dass der Ausgangsverbinder (30, $30_1$, $30_2$) Anschlusszungen (35, 41, 47) aufweist, die sich parallel zur Achse des genannten Motors erstrecken.

14. Motor gemäss Anspruch 3, dadurch gekennzeichnet, dass ein Ausgangsverbinder (62) durch die Wandung (63) des Motorgehäuses hindurchgeht.

15. Motor gemäss Anspruch 14, dadurch gekennzeichnet, dass die gedruckte Schaltungsplatte (51) Anschlusszungen (61) trägt, die sich in komplementäre Buchsenteile des Ausgangsverbinders (62) einfügen.

16. Motor gemäss Anspruch 3, dadurch gekennzeichnet, dass die gedruckte Schaltungsplatte (51) Stifte (67 bis 70) trägt, die mit komplementären, mit den Kontakten (89 bis 92) eines Kopplers (52) verbundenen Kontakten (85 bis 88) zusammenwirken, um eine Anlaufwicklung (53) und/oder eine zusätzliche Wicklung (54), die den Motor mit einer anderen Geschwindigkeit als die, mit der er angetrieben wird, wenn die Hauptwicklung (55) mit Strom versorgt ist, zu- oder abzuschalten.

17. Motor gemäss Anspruch 16, dadurch gekennzeichnet, dass der Koppler eine isolierende Grundplatte (93) enthält, auf welcher leitende Arme ($89_1$ bis $92_1$) als elektrische Verbindungen zwischen den Koppler-Kontakten und den Stiften (85 bis 88) angeordnet sind.

18. Motor gemäss den Ansprüchen 14 und 17, dadurch gekennzeichnet, dass die gedruckte Schaltungsplatte (51) sich in etwa parallel zur Motorachse erstreckt und dass die Grundplatte (93) des Kopplers rechtwinklig zu dieser Achse steht.

19. Motor gemäss irgendeinem der Ansprüche 16 bis 18, dadurch gekennzeichnet, dass die gedruckte Schaltungsplatte einen herausragenden Teil aufweist, der die Enden (76) der zu der Kante (75) dieses vorstehenden Teiles rechtwinklig verlaufenden Leiterbahnen trägt, und dass die Stifte (67 bis 70) gleichfalls rechtwinklig zu der genannten Kante stehen und paarweise auf der einen bzw. anderen Seite des herausragenden Teiles angeordnet sind.

20. Motor gemäss Anspruch 1, dadurch gekennzeichnet, dass der Anschluss mit den Aussenkreisen direkt im abnehmbaren Teil (110) erfolgt.

21. Motor gemäss den Ansprüchen 3 und 20, dadurch gekennzeichnet, dass die Platte (110) in der Art einer Platte mit gedruckten Schaltungen parallel verlaufende Kanten aufweist, an denen Leiterbahnen (111 bis 116) dieser Platte enden.

22. Waschmaschine, dadurch gekennzeichnet, dass ihre Trommel durch einen elektrischen Motor gemäss irgendeinem der Ansprüche 1 bis 21 angetrieben wird.

**Claims**

1. Electric motor having supply and control conductors emerging from its stator and a removable member ensuring a predetermined correspondance between the conductors emerging from the stator and the output terminals outside of the housing of the motor, characterized in that it comprises a connector (14) connecting the wires from the stator inside of the housing (12) of the motor and fixed to this housing, and in that the removable member (20, 40, 110) traverses the wall of the motor housing through an opening (17) of this housing.

2. Motor according to claim 1, characterized in that the removable member (20) and the connector (14) connecting the wires from the stator are such that the insertion and replacement of said member are performed by a simple translational movement.

3. Motor according to claim 1 or claim 2, characterized in that the removable member comprises a board (20; 51; 110) of the printed circuit type.

4. Motor according to any of the preceding claims, characterized in that it comprises an output connector (30) fixed to the motor housing outside thereof.

5. Motor according to claim 3, characterized in that the board (20) has conductor members $(25_1, 25_2, 25_6)$ in the neighborhood of one of its edges (27) and adapted to be electrically connected to the terminals of the first connector (14) connecting the wires from the stator, by a translational movement inside of this connector.

6. Motor according to claim 5, characterized in that the portion of the board (20) which is to remain outside of the housing (12) has conductive studs $(28_1, 28_2)$ associated with conductive members $(25_1, 25_2)$ and adapted to contact the ends $(31_1, 31_2)$ of tongues $(29_1, 29_2)$ forming part of the output connector (30).

7. Motor according to claim 6, characterized in that the conductive studs $(28_1, 28_2)$ are provided on a single face of the board (20).

8. Motor according to claim 6, characterized in that the studs $(43_1, 43_2)$ are provided on both faces of the board (40).

9. Motor according to claim 3, characterized in that pins $(46_1, 46_2)$ project from the portion of the board (45) lying outside of the housing, said pins being adapted to be connected to corresponding terminals of an output connector (30) by plugging, soldering or crimping.

10. Motor according to any of the preceding claims, characterized in that the conductor wires (13) emerging from the windings (11) of the stator (10) and terminating at the corresponding connector (14) are enemaled.

11. Motor according to any of the preceding claims, characterized in that the conductor(s) is (are) rigidly secured to the housing (12) by snapping engagement.

12. Motor according to claim 3, characterized in that the board (20, $20_a$, 40, 45) is arranged perpendicularly to the axis of the motor.

13. Motor according to claims 4 and 12, characterized in that the output connector (30, $30_1$, $30_2$,) has connection tongues (35, 41, 47) extending parallel to said motor axis.

14. Motor according to claim 3, characterized in that an output connector (62) traverses the wall (63) of the motor housing.

15. Motor according to claim 14, characterized in that the printed circuit board (51) carries tongues (61) fitting into complementary female elements of the output connector (62).

16. Motor according to claim 3, characterized in that the printed circuit board (51) carries plugging members (67 to 70) for cooperation with complementary plugging members (85 to 88) connected to the contacts (89 to 92) of a coupling member (52) for connecting or disconnecting a starting winding (53) and/or a supplementary winding (54) allowing to rotate the motor at a speed different from that at which it rotates when the main winding (55) is supplied.

17. Motor according to claim 16, characterized in that the coupling member comprises an insulating base (93) whereon conductive arms $(89_1$ to $92_1)$ are arranged to establish the electric connection between the contacts of the coupling member and the plugging members (85 to 88).

18. Motor according to claims 14 and 17, characterized in that the printed circuit board (51) extends substantially parallel to the motor axis, the base (93) of the coupling member being perpendicular to this axis.

19. Motor according to any of claims 16 to 18, characterized in that the printed circuit board has a projecting portion carrying the ends (76) of conductive strips which are perpendicular to the edge (75) of this projecting part, and in that the plugging members (67 to 70) are likewise perpendicular to said edge and are arranged by pairs on both sides of the projecting part.

20. Motor according to claim 1, characterized in that the connection to exterior circuits is directly performed on the removable member (110).

21. Motor according to claims 3 and 20, characterized in that the printed circuit board (110) has parallel edges, the conductive strips (111 to 116) of this board ending at these edges.

22. Washing machine, characterized in that its drum is driven by an electric motor according to any of claims 1 to 21.

# FIG.1

# FIG.1a

FIG.2

FIG.2a

FIG.10

FIG.4

FIG.3

FIG.5

FIG.6

0 056 756

FIG.7

FIG.8

FIG.9

15